# EUROPÄISCHE PATENTANMELDUNG

(11) **EP 1 905 738 A1**
(43) Veröffentlichungstag der Anmeldung: **02.04.2008**
(21) Anmeldenummer: 06121390.6
(22) Anmeldetag: 28.09.2006
(51) Int. Cl.: C01B 15/10, B01J 2/16

(54) **Verfahren zur Herstellung von granulatförmigem Natriumpercarbonat**

(71) Anmelder: Evonik Degussa GmbH, 40474 Düsseldorf (DE)
(72) Erfinder: Leininger, Stefan, 63505 Langenselbold (DE); Scheibe, Michael Dr., 79618 Rheinfelden (DE); Kaiser, Lothar, 79618 Rheinfelden (DE); Trautvetter, Bertram, 79618 Rheinfelden (DE); Waldemar, Hessberger, 63755 Alzenau (DE); Marcel, Verduyn Dr., 63450 Hanau (DE); Holger Pitsch, 63533 Mainhausen (DE); Harald, Jakob Dr., 63594 Hasselroth (DE)

(57) **Zusammenfassung**

Das Verfahren zur Herstellung von granulatförmigem Natriumpercarbonat durch Wirbelschichtaufbaugranulation umfasst das Versprühen einer wässrigen Lösung von Wasserstoffperoxid und einer wässrigen Lösung von Natriumcarbonat mit mindestens einer Mehrstoffdüse mit externer Mischung in eine Natriumpercarbonatpartikel enthaltende Wirbelschicht und gleichzeitige Verdampfen von Wasser und ist dadurch gekennzeichnet dass die Lösung von Natriumcarbonat zusätzlich Natriumcarbonat und/oder Natriumpercarbonat in suspendierter Form enthält und vor der Zufuhr zur Mehrstoffdüse durch eine Dispergiervorrichtung zum Dispergieren von Feststoffen geführt wird.

Mit dem Verfahren lässt sich die Verstopfung der Mehrstoffdüse vermeiden und staubförmiges Natriumpercarbonat aus dem Abgasstrom der Wirbelschicht in die Granulation zurückführen.

## Beschreibung

Gegenstand der Erfindung ist ein Verfahren zur Herstellung von granulatförmigem Natriumpercarbonat durch Wirbelschichtaufbaugranulation, bei dem Natriumcarbonat und/oder Natriumpercarbonat in suspendierter Form den Sprühdüsen zugeführt werden kann, ohne dass es zu einer Verstopfung der Düsen kommt.

Natriumpercarbonat wird zunehmend als bleichwirksamer Bestandteil in Waschmitteln und Reinigungsmitteln eingesetzt. Natriumpercarbonat muss für diese Anwendung eine ausreichende Lagerbeständigkeit in Waschmittel- und Reinigungsmittelzubereitungen aufweisen, da es sonst bei der Lagerung der Waschmittel und Reinigungsmittel zu einem unerwünschten Verlust an Aktivsauerstoff und damit an Bleichwirkung kommt. Natriumpercarbonat ist feuchtigkeitsempfindlich und zersetzt sich in Waschmittel-und Reinigungsmittelzubereitungen bei Einwirkung von Feuchtigkeit unter Verlust von Aktivsauerstoff. Deshalb wird Natriumpercarbonat zur Herstellung von Waschmitteln oder Reinigungsmitteln üblicherweise in umhüllter Form eingesetzt, wobei die Hüllschicht die Einwirkung von Feuchtigkeit auf die umhüllten Natriumpercarbonatpartikel verhindert. Durch die Verwendung von granulatförmigem Natriumpercarbonat kann schon mit geringen Mengen an Hüllmaterial eine wirksame Hüllschicht erreicht werden.

Granulatförmiges Natriumpercarbonat mit einer glatten Oberfläche, das für eine Umhüllung besonders geeignet ist, lässt sich mit dem aus WO 95/06615 bekannten Verfahren der Wirbelschichtaufbaugranulation herstellen. Bei diesem Verfahren werden eine wässrige Lösung von Wasserstoffperoxid und eine wässrige Lösung von Natriumcarbonat über eine Mehrstoffdüse mit externer Mischung in eine Natriumpercarbonatpartikel enthaltende Wirbelschicht gesprüht und gleichzeitig Wasser verdampft. Im Sprühkegel der Mehrstoffdüse werden durch Vermischen der Wasserstoffperoxidlösung und der Natriumcarbonatlösung Tröpfchen einer Natriumpercarbonatlösung erzeugt, die in der Regel übersättigt ist. In der Wirbelschicht treffen diese Tröpfchen auf Natriumpercarbonatpartikel, auf denen sich aus der Lösung Natriumpercarbonat abscheidet und von deren Oberfläche das mit den wässrigen Lösungen eingebrachte Wasser durch das zur Fluidisierung der Wirbelschicht zugeführte Gas verdampft wird. Das Verfahren hat allerdings den Nachteil, dass relativ große Mengen an Wasser verdampft werden müssen. Außerdem fällt durch den Abrieb von Partikeln in der Wirbelschicht, sowie durch unerwünschte Trocknung von Tröpfchen vor dem Auftreffen auf Natriumpercarbonatpartikel staubförmiges Natriumpercarbonat an, das mit dem Fluidisierungsgas aus der Wirbelschicht ausgetragen wird.

Das mit dem Abgas aus der Wirbelschicht anfallende staubförmige Natriumpercarbonat genügt nicht den Anforderungen für die Verwendung in Waschmitteln und wird deshalb bisher in das Herstellverfahren zurückgeführt, indem es bei der Herstellung der Natriumcarbonatlösung zugesetzt wird. In gleicher Weise kann auch staubförmiges Natriumpercarbonat aus anderen Prozessschritten, wie einem Coatungsschritt oder einer pneumatischen Förderung von Natriumpercarbonatpartikeln in das Herstellverfahren zurückgeführt werden. Dabei geht jedoch ein großer Teil des im staubförmigen Natriumpercarbonat gebundenen Wasserstoffperoxids durch Zersetzung in der alkalischen Natriumcarbonatlösung verloren.

In EP 0 787 682 A1 wird vorgeschlagen, an Stelle der Natriumcarbonatlösung eine Natriumcarbonatsuspension der Mehrstoffdüse zuzuführen, um die zu verdampfende Wassermenge zu reduzieren. Zusätzlich kann auch kristallines Natriumpercarbonat mit der Natriumcarbonatsuspension oder der Sprühluft zugeführt werden. Das in EP 0 787 682 A1 beschriebene Verfahren hat allerdings den Nachteil, dass es schon nach kurzer Betriebsdauer zu einer Verstopfung der Düsen kommt, wie bei Versuchen festgestellt wurde, die im Rahmen eines beim Europäischen Patentamt eingelegten Einspruchs gegen EP 0 787 682 B1 durchgeführt wurden.

Es besteht deshalb ein Bedarf nach einem Verfahren zur Herstellung von granulatförmigem Natriumpercarbonat durch Wirbelschichtaufbaugranulation, bei dem Natriumcarbonat auch in suspendierter Form den Sprühdüsen zugeführt werden kann, ohne dass es zu einer Verstopfung der Düsen kommt. Ebenso besteht ein Bedarf nach einer Rückführung von staubförmigem Natriumpercarbonat in das Verfahren, bei der das im Natriumpercarbonat gebundene Wasserstoffperoxid erhalten bleibt und für die Herstellung des gewünschten granulatförmigen Natriumpercarbonats genutzt wird.

Es wurde nun gefunden, dass sich diese Aufgaben lösen lassen durch ein Verfahren zur Herstellung von granulatförmigem Natriumpercarbonat durch Wirbelschichtaufbaugranulation, das das Versprühen einer wässrigen Lösung von Wasserstoffperoxid und einer wässrigen Lösung von Natriumcarbonat mit mindestens einer Mehrstoffdüse mit externer Mischung in eine Natriumpercarbonatpartikel enthaltende Wirbelschicht und gleichzeitige Verdampfen von Wasser umfasst, wobei die Lösung von Natriumcarbonat zusätzlich Natriumcarbonat und/oder Natriumpercarbonat in suspendierter Form enthält und vor der Zufuhr zur Mehrstoffdüse durch eine Dispergiervorrichtung zum Dispergieren von Feststoffen geführt wird.

Im erfindungsgemäßen Verfahren wird eine wässrige Lösung von Wasserstoffperoxid verwendet, die vorzugsweise einen Gehalt an Wasserstoffperoxid im Bereich von 30 bis 75 Gew.-%, besonders bevorzugt 40 bis 70 Gew.-% aufweist. Die Wasserstoffperoxidlösung kann zusätzlich noch das Natriumpercarbonat stabilisierende Additive enthalten. Als stabilitätserhöhende Additive werden vorzugsweise Alkalimetallsilikate, insbesondere Wasserglas, Magnesiumsalze, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium-oder Magnesiumsalze verwendet.

Im erfindungsgemäßen Verfahren wird außerdem eine wässrige Lösung von Natriumcarbonat verwendet, die zusätzlich Natriumcarbonat, Natriumpercarbonat oder beides in suspendierter Form enthält. Die Mengen an suspendiertem Natriumcarbonat bzw. Natriumpercarbonat können in weiten Grenzen gewählt werden, so lange die Suspension fließfähig und pumpfähig bleibt. Die wässrige Lösung von Natriumcarbonat kann zusätzlich noch das Natriumpercarbonat stabilisierende Additive enthalten, vorzugsweise eines der im vorangenhenden Absatz genannten Additive. Wenn die Lösung suspendiertes Natriumpercarbonat enthält, das aus einer nachfolgenden Coatingstufe oder aus einer pneumatischen Förderung von umhüllten Natriumpercarbonatpartikeln stammt, dann kann die Lösung von Natriumcarbonat auch noch Anteile der mit diesem Natriumpercarbonat eingebrachten Hüllstoffe enthalten.

Bei dem erfindungsgemäßen Verfahren wird die wässrige Lösung von Natriumcarbonat, die zusätzlich Natriumcarbonat, Natriumpercarbonat oder beides in suspendierter Form enthält, vor der Zufuhr zu den Sprühdüsen durch eine Dispergiervorrichtung zum Dispergieren von Feststoffen geführt. Als Dispergiervorrichtung eignen sich dabei alle Vorrichtungen, mit denen sich die Partikel von Natriumcarbonat bzw. Natriumpercarbonat in der Lösung von Natriumcarbonat gleichmäßig verteilen lassen, wobei Agglomerate von Natriumcarbonatpartikeln oder Natriumpercarbonatpartikeln zerstört werden. Geeignete Dispergiervorrichtungen sind beispielsweise Ultraschalldispergatoren. Vorzugsweise werden aber Dispergiervorrichtungen verwendet, die mechanisch wirken, beispielsweise durch Prallkräfte oder Scherkräfte. Besonders bevorzugt sind Dispergiervorrichtungen, bei denen eine Scherung der Suspension zwischen einem Rotorelement und einem Statorelement erfolgt. Geeignete Dispergiervorrichtungen sind beispielsweise die von der Firma Ika vertriebenen Inline-Dispergiergeräte der Baureihen Ultra-Turrax® und Dispax®.

Die Dispergiervorrichtung wird vorzugsweise so ausgelegt und betrieben, dass sie in der Suspension Agglomerate mit einem Durchmesser zerstört, der mehr als ein Drittel der minimalen Kanalabmessung der verwendeten Mehrstoffdüse beträgt. Wird die Suspension durch einen zentralen Kanal einer Mehrstoffdüse geführt, dann bezieht sich die minimale Kanalabmessung auf den minimalen Durchmesser des zentralen Kanals. Wird die Suspension durch einen ringförmigen Kanal einer Mehrstoffdüse geführt, dann bezieht sich die minimale Kanalabmessung auf die minimale Breite des Ringspalts.

Vorzugsweise wird die Natriumcarbonatlösung mit den suspendierten Partikeln von Natriumcarbonat und/oder Natriumpercarbonat kontinuierlich durch die Dispergiervorrichtung geführt und unmittelbar anschließend der Mehrstoffdüse zugeführt. Die durch eine Dispergiervorrichtung geführt Suspension kann dabei auch gleichzeitig mehreren Mehrstoffdüsen zugeführt werden.

In einer bevorzugten Ausführungsform wird in der Dispergiervorrichtung festes Natriumcarbonat und/oder festes Natriumpercarbonat in einer wässrigen Lösung von Natriumcarbonat dispergiert. Dabei erfolgt das Einbringen des Feststoffs in die Natriumcarbonatlösung und das Dispergieren des Feststoffs in der Lösung im gleichen Apparat. Geeignete Dispergiervorrichtungen für diese Ausführungsform sind die von der Firma Ika vertriebenen Inline-Dispergiergeräte der MHD Baureihe.

Die Natriumcarbonatlösung kann zusätzlich noch das Natriumpercarbonat stabilisierende Additive enthalten, wobei die gleichen Additive zugesetzt werden können wie bei der Wasserstoffperoxidlösung.

Die Wasserstoffperoxidlösung und die durch die Dispergiervorrichtung geführte Natriumcarbonatlösung mit suspendierten Partikeln von Natriumcarbonat und/oder Natriumpercarbonat werden beide einer oder mehreren Mehrstoffdüsen zugeführt, in denen sie durch getrennte Kanäle in der Düse so versprüht werden, dass eine externe Mischung im Sprühkegel der Düse erfolgt. Vorzugsweise wird dabei zusätzlich ein Treibgas durch einen weiteren Kanal in der Düse zugeführt. Geeignete Mehrstoffdüsen mit einem oder zwei Kanälen für Treibgas sind aus WO 95/06615 und EP 0 787 682 A1 bekannt. Als Treibgas wird vorzugsweise Luft verwendet.

Die Mengenströme von Wasserstoffperoxidlösung und Natriumcarbonatlösung mit suspendierten Partikeln von Natriumcarbonat und/oder Natriumpercarbonat werden vorzugsweise so gewählt, dass sich ein Molverhältnis von Natriumcarbonat zu Wasserstoffperoxid im Bereich von 1 : 1,4 bis 1 : 1,7 und besonders bevorzugt 1 : 1,5 bis 1 : 1,65 ergibt. Das Molverhältnis bezieht sich dabei auf die Gesamtmenge an gelöstem und suspendiertem Natriumcarbonat, schließt aber suspendiertes Natriumpercarbonat nicht mit ein. Die Temperatur der beiden Lösungen liegt vorzugsweise im Bereich von 20 °C bis 70 °C.

Die Wasserstoffperoxidlösung und Natriumcarbonatlösung mit suspendierten Partikeln von Natriumcarbonat und/oder Natriumpercarbonat werden mit der Mehrstoffdüse in eine Natriumpercarbonatpartikel enthaltende Wirbelschicht gesprüht. Die Mehrstoffdüsen können dazu oberhalb der Wirbelschicht oder innerhalb der Wirbelschicht angeordnet sein. Vorzugsweise werden die Mehrstoffdüsen innerhalb der Wirbelschicht angeordnet, um den Weg der erzeugten Tropfen zu den Partikeln der Wirbelschicht kurz zu halten und eine Sprühtrocknung der Tropfen zu vermeiden.

Die Wirbelschicht wird durch die Zufuhr eines Fluidisierungsgases aufrecht erhalten, das gleichzeitig auch die Verdampfung von Wasser bewirkt. Das Fluidisierungsgas wird der Wirbelschicht vorzugsweise mit einer Temperatur im Bereich von 120 bis 500 °C, besonders bevorzugt 200 bis 500 °C und insbesondere 300 bis 500 °C zugeführt. Temperatur und Menge an Fluidisierungsgas werden so gewählt, dass die mit den Lösungen eingebrachte Menge an Wasser zum größten Teil verdampft werden kann. Vorzugsweise werden Temperatur und Menge an Fluidisierungsgas so gewählt, dass in der Wirbelschicht eine Temperatur im Bereich von 40 bis 95 °C, besonders bevorzugt 50 bis 80 °C und insbesondere 60 bis 80 °C aufrecht erhalten wird.

Bei dem erfindungsgemäßen Verfahren kann das Versprühen in die Wirbelschicht kontinuierlich oder diskontinuierlich erfolgen. Vorzugsweise erfolgt das Versprühen kontinuierlich und es wird kontinuierlich Granulat aus der Wirbelschicht entnommen. Die Entnahme von Granulat aus der Wirbelschicht erfolgt vorzugsweise über eine klassierende Austragsvorrichtung, mit der Granulate mit zu kleinem Korndurchmesser in die Wirbelschicht zurückgeführt werden.

Bei Inbetriebnahme der Wirbelschicht werden in der Wirbelschicht Partikel als Keime vorgelegt, auf die die Lösungen aufgesprüht werden. Vorzugsweise werden dazu Natriumpercarbonatpartikel verwendet, die eine geringere Korngröße als die herzustellenden Granulate aufweisen. Bei einem kontinuierlichen Betrieb der Wirbelschicht müssen in der Wirbelschicht kontinuierlich neue Keime für den Aufbau von Granulaten zur Verfügung gestellt werden. Dies kann durch die Erzeugung von Keimen durch Abrieb oder Kornbruch innerhalb der Wirbelschicht erfolgen. Vorzugsweise wird der Wirbelschicht aber von außen Keimmaterial in fester Form zugeführt, um die Keimbildungsrate und damit die Korngrößenverteilung der erhaltenen Granulate zu steuern.

Während des Betriebs der Wirbelschicht werden mit dem Fluidisierungsgas aus der Wirbelschicht feine Partikel von Natriumpercarbonat in Form von Staub ausgetragen. Diese Partikel können aus dem Abgasstrom der Wirbelschicht durch geeignete Abscheidevorrichtungen, zum Beispiel Wäscher, Filter oder Zyklone abgeschieden werden. Vorzugsweise werden diese Partikel in fester Form als Staub aus dem Abgasstrom der Wirbelschicht abgetrennt und der abgetrennte Staub wird ganz oder teilweise der Dispergiervorrichtung zugeführt und in der Natriumcarbonatlösung dispergiert, die der Mehrstoffdüse zugeführt wird.

Das erfindungsgemäße Verfahren hat gegenüber dem aus EP 0 787 682 A1 bekannten Verfahren den Vorteil, dass es über einen langen Zeitraum betrieben werden kann, ohne dass es zu einer Verstopfung der Mehrstoffdüse kommt. Außerdem wird gegenüber dem aus EP 0 787 682 A1 bekannten Verfahren ein gleichmäßigeres Versprühen der Partikel enthaltenden Natriumcarbonatlösung erzielt, da keine Partikel in der Düsenöffnung stecken bleiben und zu Ungleichverteilungen im Sprühkegel führen. Dies hat die Wirkung, dass mit einem geringeren Überschuss an Wasserstoffperoxid ein praktisch vollständiger Umsatz zu Natriumpercarbonat erzielt werden kann.

In der Ausführungsform, bei der aus dem Abgasstrom der Wirbelschicht abgetrennter Staub in die Dispergiervorrichtung zurückgeführt wird, ermöglicht das erfindungsgemäße Verfahren eine Rückführung des staubförmigen Natriumpercarbonats in das Verfahren ohne Verlust des darin gebundenen Wasserstoffperoxids. Dadurch wird es möglich, eine größere Menge an eingesetztem Wasserstoffperoxid in verkaufsfähiges granulatförmiges Natriumpercarbonat einheitlicher Qualität umzusetzen. Die Rückführung des staubförmigen Natriumpercarbonats wirkt sich nicht nachteilig auf die Qualität des erzeugten granulatförmigen Natriumpercarbonats aus.

### Beispiele

### Beispiel 1

Versprühen einer Natriumcarbonatlösung mit suspendierten Natriumpercarbonatpartikeln mit und ohne Dispergiervorrichtung.
300 l/h einer 30 Gew.-% Sodalösung wurden über eine Inline-Dispergiermaschine MHD 2000/5 der Firma IKA einer Dreistoffdüse der Firma Schlick, Modell 0/56 S3 zugeführt und ohne Zufuhr von Treibgas versprüht. In der Dispergiermaschine wurden 80 bis 150 kg/h staubförmiges Natriumpercarbonat mit einer mittleren Partikelgröße von 45 µm in der Sodalösung mit einem zweireihigen Rotor-Stator-Dispergierwerkzeug mit einer Zahnspaltweite von 3 mm dispergiert. Die Sprühdüse wurde über einen Zeitraum von 4 h ohne Verstopfungen betreiben und erzeugte dabei einen gleichmäßigen Sprühkegel.

In einem Vergleichsversuch wurde an Stelle des Dispergierwerkzeugs ein nicht dispergierend wirkendes Suspendierwerkzeug eingesetzt. Innerhalb von kurzer Zeit kam es durch ein teilweises Verstopfen des Düsenspalts zu einem unregelmäßigen Sprühkegel mit Lücken.

### Beispiel 2

Rückführung von staubförmigen Natriumpercarbonat in die Wirbelschichtaufbaugranulation.

Über die Apparatur von Beispiel 1 wurden 100 kg/h staubförmiges Natriumpercarbonat aus dem Abgasstrom einer Produktionsanlage zur Herstellung von granulatförmigem Natriumpercarbonat mit einer mittleren Partikelgröße von 45 µm in 280 1/h 30 Gew.-% Sodalösung dispergiert und einer Dreistoffdüse der Produktionsanlage zugeführt. Über die Dreistoffdüse wurde die erhaltene Suspension, sowie 90 l/h 44 Gew.-% Wasserstoffperoxid unter Verwendung von Luft als Treibgas in die Wirbelschicht der Produktionsanlage versprüht. Während einer Betriebsdauer von 3 Tagen wurde keine Zunahme an Düsenverstopfungen festgestellt. Aus der Mengenbilanz der Anlage wurde ermittelt, dass mehr als 50% des zugeführten staubförmigen Natriumpercarbonats in das hergestellte granulatförmige Natriumpercarbonat aufgenommen wurden. Die Rückführung von staubförmigem Natriumpercarbonat hatte keine Auswirkung auf die Korngrößenverteilung und die Abriebfestigkeit des hergestellten granulatförmigen Natriumpercarbonats.

## Patentansprüche

1. Verfahren zur Herstellung von granulatförmigem Natriumpercarbonat durch Wirbelschichtaufbaugranulation, umfassend das Versprühen einer wässrigen Lösung von Wasserstoffperoxid und einer wässrigen Lösung von Natriumcarbonat mit mindestens einer Mehrstoffdüse mit externer Mischung in eine Natriumpercarbonatpartikel enthaltende Wirbelschicht und gleichzeitiges Verdampfen von Wasser,
**dadurch gekennzeichnet,**
**dass** die Lösung von Natriumcarbonat zusätzlich Natriumcarbonat und/oder Natriumpercarbonat in suspendierter Form enthält und vor der Zufuhr zur Mehrstoffdüse durch eine Dispergiervorrichtung zum Dispergieren von Feststoffen geführt wird.

2. Verfahren nach Anspruch 1, **dadurch gekennzeichnet, dass** die Dispergiervorrichtung mechanisch wirkt.

3. Verfahren nach Anspruch 2, **dadurch gekennzeichnet, dass** in der Dispergiervorrichtung eine Scherung der Suspension zwischen einem Rotorelement und einem Statorelement erfolgt.

4. Verfahren nach einem der vorangehenden Ansprüche, **dadurch gekennzeichnet, dass** in der Dispergiervorrichtung festes Natriumcarbonat und/oder festes Natriumpercarbonat in einer wässrigen Lösung von Natriumcarbonat dispergiert wird.

5. Verfahren nach Anspruch 4, **dadurch gekennzeichnet, dass** aus einem Abgasstrom der Wirbelschicht Natriumpercarbonat in Form von Staub abgetrennt wird und der abgetrennte Staub ganz oder teilweise der Dispergiervorrichtung zugeführt wird.
